(19) Europäisches Patentamt
European Patent Office
Office européen des brevets

(11) **EP 4 550 791 A1**

(12) **EUROPEAN PATENT APPLICATION**
published in accordance with Art. 153(4) EPC

(43) Date of publication:
**07.05.2025  Bulletin 2025/19**

(21) Application number: **23831974.3**

(22) Date of filing: **03.07.2023**

(51) International Patent Classification (IPC):
**H04N 19/52** *(2014.01)*     **H04N 19/105** *(2014.01)*
**H04N 19/132** *(2014.01)*    **H04N 19/176** *(2014.01)*
**H04N 19/70** *(2014.01)*

(52) Cooperative Patent Classification (CPC):
**H04N 19/105; H04N 19/132; H04N 19/176;**
**H04N 19/52; H04N 19/70**

(86) International application number:
**PCT/KR2023/009336**

(87) International publication number:
**WO 2024/005616 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.07.2022  US 202263357672 P**

(71) Applicant: **LG Electronics Inc.**
**Yeongdeungpo-gu**
**Seoul 07336 (KR)**

(72) Inventors:
• **PARK, Naeri**
 **Seoul 06772 (KR)**
• **NAM, Junghak**
 **Seoul 06772 (KR)**
• **LIM, Jaehyun**
 **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE, AND RECORDING MEDIUM HAVING BITSTREAM STORED THEREON**

(57)    An image decoding/encoding method and device, according to the present disclosure, may: derive a temporal vector of the current block on the basis of a motion vector of one candidate in a candidate group including a plurality of candidates; on the basis of the temporal vector, determine a collocated block of the current block, in a collocated picture; on the basis of a motion vector of the collocated block, derive a motion vector of the current block by sub-block unit; and carry out inter prediction for the current block on the basis of the motion vector of the current block.

FIG.4

Derive temporal vector — S400

Determine collocated block — S410

Derive motion vector — S420

Perform inter prediction — S430

EP 4 550 791 A1

**Description**

[Technical Field]

The present disclosure relates to an image encoding/decoding method and device, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and a device for performing inter prediction by using a subblock-based temporal motion vector predictor (SbTMVP).

The present disclosure is to provide a method and a device for considering more various candidates in deriving a sub-block based temporal motion vector predictor.

[Technical Solution]

An image decoding method and device according to the present disclosure may derive a temporal vector of a current block based on a motion vector of one candidate in a candidate group including a plurality of candidates; based on the temporal vector, determine a collocated block of the current block in a collocated picture; based on a motion vector of the collocated block, derive a motion vector of the current block in a sub-block unit; and perform inter prediction for the current block based on a motion vector of the current block.

In an image decoding method and device according to the present disclosure, the candidate group may include an adjacent spatial neighboring block of the current block and a non-adjacent spatial neighboring block of the current block as a candidate.

In an image decoding method and device according to the present disclosure, the non-adjacent spatial neighboring block may include a first block including a sample that is separated by a value obtained by multiplying a height of the current block by 2 from a top-left sample adjacent to a top-left corner of the current block within a left sample line adjacent to the current block and a second block including a sample that is separated by a value obtained by multiplying a width of the current block by 2 from the top-left sample within a top sample line adjacent to the current block.

In an image decoding method and device according to the present disclosure, the one candidate may be selected from the plurality of candidates included in the candidate group based on template matching.

In an image decoding method and device according to the present disclosure, a cost of the template matching may be calculated based on a sum of absolute differences (SAD) or a mean-removed sum of absolute differences (MRSAD) between a template region of the current block and a template region of a block specified by a motion vector of the plurality of candidates included in the candidate group.

In an image decoding method and device according to the present disclosure, a cost of the template matching may be calculated based on a sum of absolute differences (SAD) or a mean-removed sum of absolute differences (MRSAD) between a template region of the current block and a template region of a sub-block or a block specified by a motion vector of a block derived based on the plurality of candidates included in the candidate group.

An image decoding method and device according to the present disclosure may configure the candidate group including the plurality of candidates based on a neighboring block of the current block.

In an image decoding method and device according to the present disclosure, the candidate group may be configured by adding a neighboring block at a specific position to the candidate group in predefined order.

An image decoding method and device according to the present disclosure may confirm whether a motion vector of a neighboring block at the specific position overlaps with a motion vector of a candidate previously included in the candidate group.

In an image decoding method and device according to the present disclosure, whether there is the overlap may be determined based on whether a difference between a motion vector of a candidate previously included in the candidate group and a motion vector of a neighboring block at the specific position is smaller than a predefined threshold value.

In an image decoding method and device according to the present disclosure, the collocated picture may be determined based on a syntax element signaled through at least one syntax of a picture header or a slice header.

In an image decoding method and device according to the present disclosure, the syntax element may be signaled separately from a syntax element indicating a collocated picture for a temporal motion vector predictor.

An image encoding method and device according to the present disclosure may determine a temporal vector of a current block based on a motion vector of one candidate in a candidate group including a plurality of candidates, based on the temporal vector, determine a collocated block of the current block in a collocated picture, based on a motion vector of the collocated block, determine a motion vector of the current block in a sub-block unit and perform inter prediction for the current block based on a motion vector of the current block.

In an image encoding method and device according to the present disclosure, the candidate group may include an adjacent spatial neighboring block of the current block and a non-adjacent spatial neighboring block of the current block as a candidate.

In an image encoding method and device according to the present disclosure, the non-adjacent spatial neighboring block may include a first block including a sample that is separated by a value obtained by multiplying a height of the current block by 2 from a top-left sample adjacent to a top-left corner of the current block within a left sample line adjacent to the current block and a second block including a sample that is separated by a value obtained by multiplying a width of the current block by 2 from the top-left sample within a top sample line adjacent to the current block.

In an image encoding method and device according to the present disclosure, the one candidate may be selected from the plurality of candidates included in the candidate group based on template matching.

In an image encoding method and device according to the present disclosure, a cost of the template matching may be calculated based on a sum of absolute differences (SAD) or a mean-removed sum of absolute differences (MRSAD) between a template region of the current block and a template region of a block specified by a motion vector of the plurality of candidates included in the candidate group.

In an image encoding method and device according to the present disclosure, a cost of the template matching may be calculated based on a sum of absolute differences (SAD) or a mean-removed sum of absolute differences (MRSAD) between a template region of the current block and a template region of a sub-block or a block specified by a motion vector of a block derived based on the plurality of candidates included in the candidate group.

An image encoding method and device according to the present disclosure may configure the candidate group including the plurality of candidates based on a neighboring block of the current block.

In an image encoding method and device according to the present disclosure, the candidate group may be configured by adding a neighboring block at a specific position to the candidate group in predefined order.

An image encoding method and device according to the present disclosure may confirm whether a motion vector of a neighboring block at the specific position overlaps with a motion vector of a candidate previously included in the candidate group.

In an image encoding method and device according to the present disclosure, whether there is the overlap may be determined based on whether a difference between a motion vector of a candidate previously included in the candidate group and a motion vector of a neighboring block at the specific position is smaller than a predefined threshold value.

In an image encoding method and device according to the present disclosure, the collocated picture may be determined based on a syntax element signaled through at least one syntax of a picture header or a slice header.

In an image encoding method and device according to the present disclosure, the syntax element may be signaled separately from a syntax element indicating a collocated picture for a temporal motion vector predictor.

A computer-readable digital storage medium storing encoded video/image information resulting in performing an image decoding method due to a decoding device according to the present disclosure is provided.

A computer-readable digital storage medium storing video/image information generated according to an image encoding method according to the present disclosure is provided.

A method and a device for transmitting video/image information generated according to an image encoding method according to the present disclosure are provided.

[Technical Effects]

In deriving a sub-block-based temporal motion vector predictor, the present disclosure may consider more various candidates for prediction, increase the accuracy of prediction and improve compression performance.

[Brief Description of the Drawings]

FIG. 1 shows a video/image coding system according to the present disclosure.

FIG. 2 shows a rough block diagram of an encoding device to which an embodiment of the present disclosure may be applied and encoding of a video/image signal is performed.

FIG. 3 shows a rough block diagram of a decoding device to which an embodiment of the present disclosure may be applied and decoding of a video/image signal is performed.

FIG. 4 shows an inter prediction method performed by a decoding device 300 as an embodiment according to the present disclosure.

FIG. 5 is a flowchart showing a process for deriving a sub-block-based motion vector predictor to which an embodiment of the present disclosure may be applied.

FIG. 6 is a flowchart showing a process for deriving a sub-block-based motion vector predictor according to an embodiment of the present disclosure.

FIG. 7 is a diagram illustrating a neighboring block to which an embodiment of the present disclosure may be applied.

FIG. 8 is a diagram for describing a method for checking an overlap between motion vectors according to an embodiment of the present disclosure.

FIG. 9 is a flowchart illustrating a method for configuring a merge candidate list according to an embodiment of the present disclosure.

FIG. 10 is a diagram illustrating a method for deriving a temporal merge candidate according to an embodiment of the present disclosure.

FIG. 11 is a diagram illustrating a method for deriving motion information from a reference block according to an embodiment of the present disclosure.

FIG. 12 is a diagram illustrating a method for deriving motion information from a reference block according to an embodiment of the present disclosure.

FIG. 13 is a diagram illustrating a method for deriving motion information from a reference block according to an embodiment of the present disclosure.

FIG. 14 is a diagram illustrating a method for deriving motion information from a reference block according to an embodiment of the present disclosure.

FIG. 15 shows a schematic configuration of an inter predictor 332 performing an intra prediction method according to the present disclosure.

FIG. 16 shows an inter prediction method performed by an encoding device 200 as an embodiment of the present disclosure.

FIG. 17 shows a schematic configuration of an inter predictor 221 performing an inter prediction method according to the present disclosure.

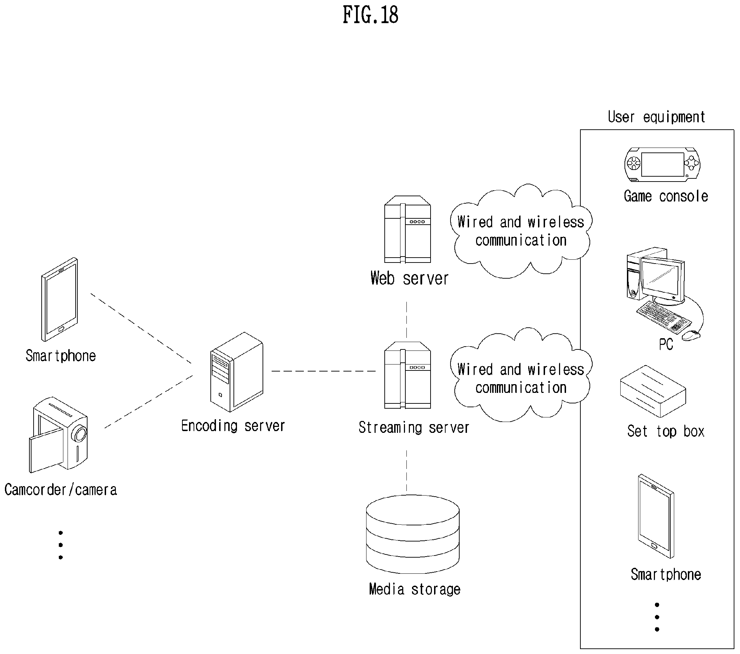

FIG. 18 represents an example of a content streaming system to which embodiments of the present disclosure may be applied.

[Detailed Description]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

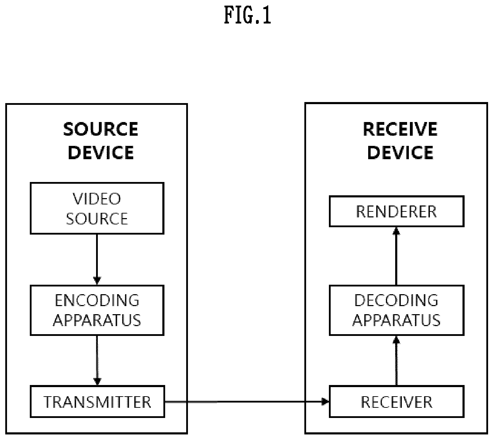

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/-image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

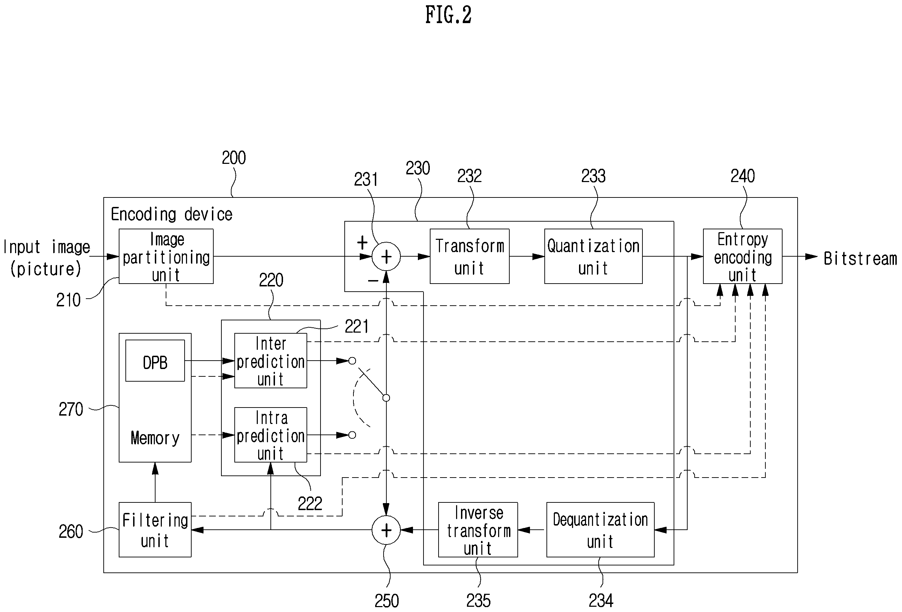

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

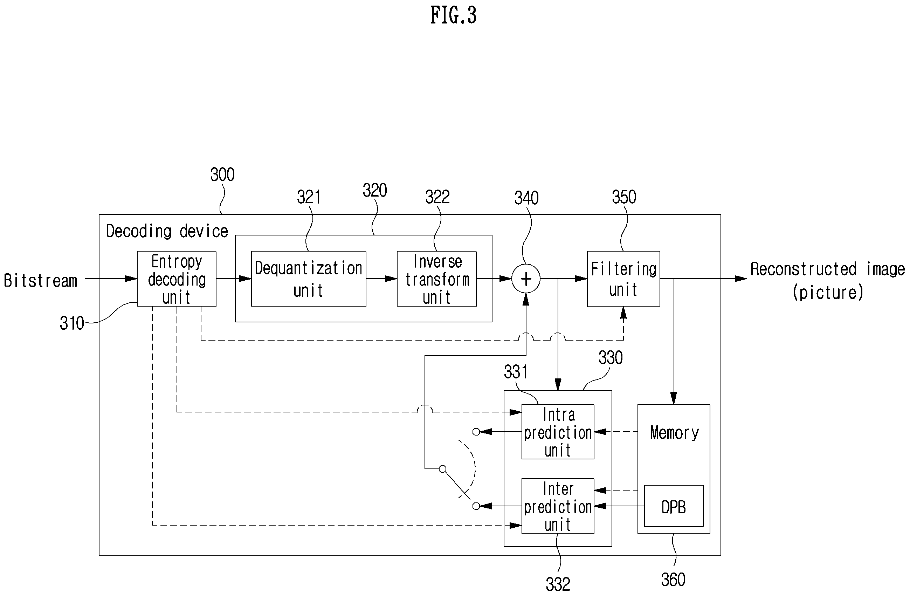

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

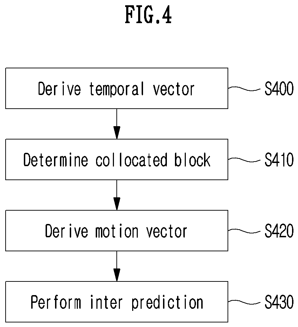

FIG. 4 shows an inter prediction method performed by a decoding device 300 as an embodiment according to the present disclosure.

In an embodiment of the present disclosure, in performing inter prediction by using a subblock-based temporal motion vector predictor (SbTMVP), a method for improving the accuracy of prediction by considering more diverse candidates is proposed. In the present disclosure, a sub-block-based temporal motion vector predictor refers to a predictor derived based on derived motion information by deriving motion information of a temporal neighboring block in a sub-block unit, and of course, a name is not limited thereto. In the present disclosure, a sub-block-based temporal motion vector predictor may be abbreviated as SbTMVP for convenience of a description.

Referring to FIG. 4, a decoding device may derive a temporal vector of a current block based on a motion vector of one candidate in a candidate group including a plurality of candidates S400.

Unlike a TMVP which derives the motion information of a block at a predefined position (i.e., a bottom-right position or a center position of a current block) within a pre-determined reference picture (or a collocated picture, colPic) as a motion vector predictor (MVP), a SbTMVP in a sub-block merge mode uses the motion information of a collocated block (or a col block) derived from the motion information of a neighboring block (e.g., the left neighboring block of a current block) as the MVP of a current block and derives a MVP in a sub-block unit. In an embodiment of the present disclosure, since the performance of a SbTMVP may be improved as the accuracy of motion information of a neighboring block is high and various candidates are considered, a method for this is proposed.

In other words, an improvement method in a process for deriving a SbTMVP that considers various temporal vectors for specifying a collocated block is proposed. A proposed method may be applied not only to a process for deriving a sub-block-based MVP, but also to a process for deriving a MVP in a MERGE/AMVP process substantially in the same manner.

According to an embodiment of the present disclosure, in order to improve the performance of the existing SbTMVP that uses the motion information of a collocated block derived from the motion information of a left neighboring block as a MVP, an optimal MVP may be derived by considering a variety of motion information derived from multiple neighboring blocks. As an example, a candidate group may include the adjacent spatial neighboring block of the current block and the non-adjacent spatial neighboring block of the current block as a candidate. It will be described in detail by referring to the following figure.

A decoding device may determine (or specify) the collocated block of a current block in a collocated picture based on a derived temporal vector S410. As an example, a collocated picture may be defined equally to an encoding device and a decoding device. Alternatively, as an example, a collocated picture may be signaled through a higher level syntax. The collocated block of a current block may be determined by a temporal vector within a collocated picture.

A decoding device may derive the motion vector of a current block in a sub-block unit based on the motion vector of a collocated block S420. In other words, a decoding device may derive (or determine) the motion vector of a sub-block within a collocated block specified by a temporal vector as the motion vector of a corresponding sub-block within a current block.

A decoding device may perform inter prediction for a current block based on the motion vector of a current block S430. A decoding device may generate the prediction block of a current block by performing inter prediction based on motion information derived in a sub-block unit within a current block. As an embodiment, the prediction block of a current block may be generated in a sub-block unit according to motion information derived in a sub-block unit.

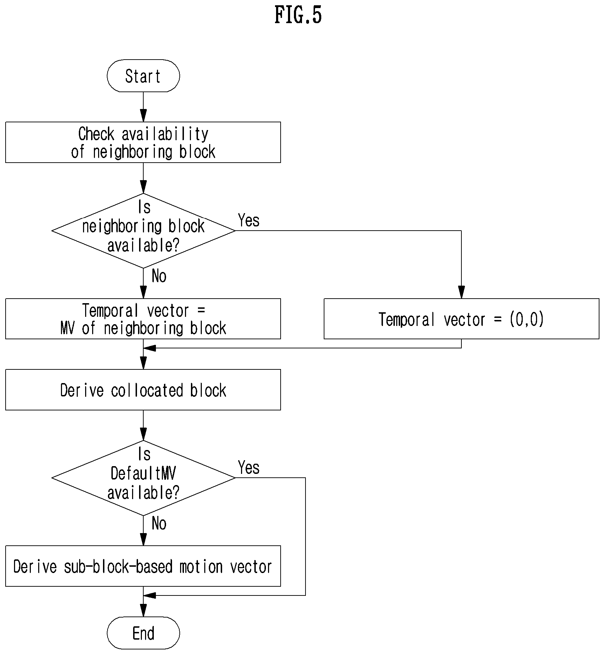

FIG. 5 is a flowchart showing a process for deriving a sub-block-based motion vector predictor to which an embodiment of the present disclosure may be applied.

In FIG. 5, it is assumed that only the motion vector of a left neighboring block (i.e., a block adjacent to the left of a bottom-left sample of a current block, A1) is used as a temporal vector as the existing SbTMVP.

Referring to FIG. 5, when a SbTMVP is used, a collocated block may be derived by using the motion information of a left neighboring block as a temporal vector. First, whether the motion information of a left neighboring block is available may be confirmed. When the motion information of a left neighboring block is available, a temporal vector may configure the motion information of a left neighboring block as a temporal vector. When the motion information of a left neighboring block is not available, a temporal vector may be configured as a zero vector.

A collocated block may be specified by a temporal vector in a collocated picture. When a default motion vector at the center position of a collocated block is available, each motion information in a sub-block unit may be stored as a MVP. In other words, when a default motion vector is available, motion information in a sub-block unit may be derived. The availability of a default motion vector may be a condition for deriving motion information in a sub-block unit.

The motion information of a sub-block that is not available in a step for deriving motion information in a sub-block unit may be replaced with a default motion vector. As an example, it may be determined that a collocated block is available in an inter mode, not in an intra block copy (IBC) mode.

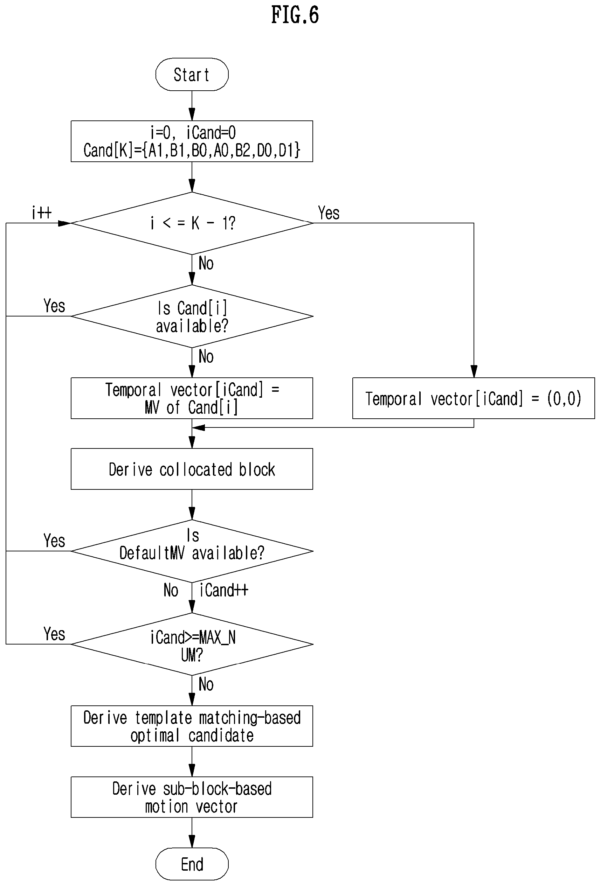

FIG. 6 is a flowchart showing a process for deriving a sub-block-based motion vector predictor according to an embodiment of the present disclosure.

Referring to FIG. 6, in order to consider more diverse motion information according to an embodiment of the present disclosure, a SbTMVP process described in FIG. 5 above may be modified and applied as shown in FIG. 6.

According to an embodiment of the present disclosure, a temporal vector may be derived by using a neighboring block at a variety of predefined positions. In other words, a neighboring block at a variety of predefined positions may be used as a SbTMVP candidate.

As an embodiment, a temporal vector may be derived by using a plurality of neighboring blocks {A1, B1, B0, A0, B2, D0, D1}. A temporal vector may be derived by using the motion vector of one candidate specified in a candidate group including a plurality of candidates. In other words, a candidate group may be {A1, B1, B0, A0, B2, D0, D1} including a plurality of neighboring blocks.

Referring to FIG. 6, when a motion vector at the center position of a collocated block derived from a temporal vector in order within a candidate group (i.e., a default motion vector) is available, it may be considered as a SbTMVP candidate. A process for deriving a temporal vector is the same as shown in FIG. 6 or as described in FIG. 5 above, and an overlapping description related thereto is omitted. This process may be repeated until MAX_NUM candidates are available or all candidates are checked. Here, MAX_NUM may represent the maximum number of SbTMVP candidates. MAX_NUM may be a predefined value. Alternatively, MAX_NUM may be a value that is explicitly signaled or a value that is implicitly derived based on encoding information.

When MAX_NUM candidates are not filled although all checks are performed for all designated neighboring blocks, a zero vector may be considered as a temporal vector. Afterwards, a candidate with the lowest cost may be determined based on template matching (or a template matching cost) for SbTMVP candidates obtained through the process. A MVP in each sub-block unit may be finally derived by using a determined candidate.

In the present disclosure, a candidate group used for deriving a temporal vector may represent a candidate group including a plurality of predefined neighboring blocks as a candidate. Alternatively, as in an embodiment shown in FIG. 6, a candidate group used for deriving a temporal vector may represent a candidate group including the maximum number (MAX_NUM) of candidates or less whose availability is confirmed among a plurality of predefined neighboring blocks.

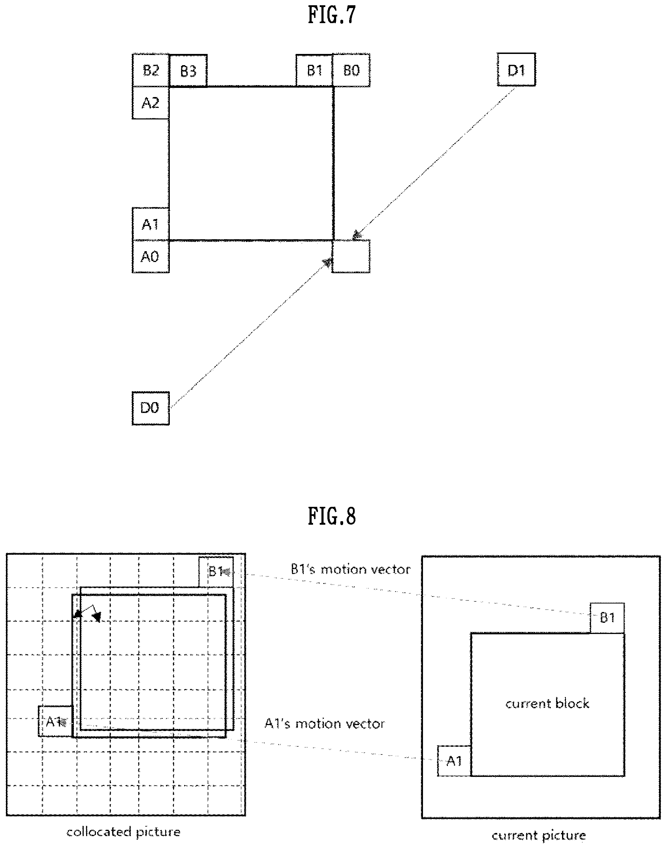

FIG. 7 is a diagram illustrating a neighboring block to which an embodiment of the present disclosure may be applied.

FIG. 7 shows a variety of reference blocks that may be considered for deriving a temporal vector. In other words, in deriving a temporal vector for specifying a collocated block, a block adjacent to a current block and a block not adjacent to a current block may be used. In the present disclosure, it may be referred to as an adjacent block and a non-adjacent block, respectively.

As an embodiment, a collocated block may be derived by using a candidate adjacent to a current block. As an example of an adjacent block, {A1, B1, B0, A0, B2, A2, B3} shown in FIG. 7 may be considered. It is an example, and the order of consideration may be changed, and some of the listed candidates may be added or omitted. For example, an adjacent block is not limited to the example, and all blocks adjacent to a current block may be a target therefor. An adjacent block may include a block at a designated position among the blocks adjacent to a current block. As an embodiment, it may be determined by checking all 4x4 blocks adjacent to the left/the top through scanning.

Specifically, a block at a left position may be scanned from the bottom to the top. In other words, scanning may be performed from the bottom-left adjacent block of a current block to the top-left adjacent block of a current block. A block at a top position may be scanned from the right to the left. In other words, scanning may be performed from the top-right adjacent block of a current block to the top-left adjacent block of a current block.

Alternatively, a block at a left position may be scanned from the top to the bottom. In other words, scanning may be performed from the top-left adjacent block of a current block to the bottom-left adjacent block of a current block. A block at a top position may be scanned from the left to the right. In other words, scanning may be performed from the top-left adjacent block of a current block to the top-right adjacent block of a current block. However, it is an example, and may be changed and applied.

In addition, as an embodiment, the number of blocks on the left/the top may be defined in a process for checking left and top blocks. As an example, when a left block is scanned in designated order, if there are K available blocks, scanning of a left block may be terminated and scanning of a top block may be performed. When there are L available top blocks, scanning of a top block may be terminated. In this case, the value of K and L may be a predefined value or may be a value variably determined according to the shape of a block.

According to an embodiment of the present disclosure, a collocated block may be derived by using a candidate that is not adjacent to a current block in order to consider a variety of reference blocks. In video encoding/decoding order, only the left and top block of a current block are valid, so in a process for deriving a MVP, only the motion vector of adjacent left and top blocks is considered.

In order to overcome this shortcoming, a TMVP technology refers to motion information at the bottom and right position of a current block. In this case, for a collocated block, a bottom-right position or a center position within a collocated picture is considered. In an embodiment of the present disclosure, similar to the purpose of preferentially considering a bottom-right position in a TMVP described above, various SbTMVP candidates may be used.

As an embodiment, the non-adjacent spatial neighboring block may include a first block including a sample separated by a value obtained by multiplying the height of the current block by 2 from a top-left sample adjacent to the top-left corner of the current block within a left sample line adjacent to the current block and a second block including a sample separated by a value obtained by multiplying the width of the current block by 2 from the top-left sample within a top sample line adjacent to the current block.

As an embodiment, a non-adjacent block may be used as a block of D0 and D1 as shown in FIG. 7, in order to consider a movement at a bottom and/or right position. It is one example, and the position of D0 and D1 blocks may be applied as one or more of the candidates according to Equation 1 below, respectively.

[Equation 1]

$$D0(x, y) = \{(-1, 2xH), (-1, 2xH - 1), (-1, 4xH), (-1, 4xH - 1), (-1, W+H), (-1, W+H - 1)\}$$

$$D1(x, y) = \{(2xW, -1), (2xW-1, -1), (4xW, -1), (4xW-1, -1), (W+H, -1), (W+H-1, -1)\}$$

In Equation 1, in this case, W and H represent the width and height of a current block, respectively. In Equation 1, W and H may be applied by being replaced with a designated value. For example, W and H may be defined as a value of 2, 4, 8, 16, 32.

In addition, a non-adjacent block candidate may be determined according to the shape of a current block. As an example, for W >= H, a non-adjacent block may be determined as in Equation 2 below.

[Equation 2]

$$D0(x, y) = \{(-1, 2xW), (-1, 2xW - 1), (-1, 4xW), (-1, 4xW - 1)\}$$

$$D1(x, y) = \{(2xW, -1), (2xW - 1, -1), (4xW, -1), (4xW - 1, -1)\}$$

Referring to Equation 2, for W >= H, it may be adjusted to a position different from the position of a bottom-left block derived by Equation 1. In addition, as an example, for W < H, a non-adjacent block may be determined as in Equation 3 below.

[Equation 3]

$$D0(x, y) = \{(-1, 2xH), (-1, 2xH - 1), (-1, 4xH), (-1, 4xH - 1)\}$$

$$D1(x, y) = \{(2xH, - 1), (2xH - 1, - 1), (4xH, - 1), (4xH - 1, - 1)\}$$

Referring to Equation 3, for W < H, it may be adjusted to a position different from the position of a top-right block derived by Equation 1.

In addition, a zero vector may be considered to consider a variety of reference blocks. While the existing SbTMVP replaces a left block with a zero vector when it is not available, a proposed method may use a zero vector when the number of candidates is not filled without using it as an alternative candidate for another candidate.

According to an embodiment of the present disclosure, up to MAX_NUM candidates may be considered as a SbTMVP candidate by using the motion vector of an adjacent block, the motion vector of a non-adjacent block and a zero vector, increasing the accuracy of prediction of a SbTMVP and improving compression performance.

Hereinafter, in deriving a SbTMVP by using a plurality of motion vectors (or temporal vectors) as in the above-described embodiment, a method for considering more diverse candidates through an effective overlap check is described. An embodiment described below may apply an overlap check to a plurality of candidates described above.

For example, an overlap may be checked by using a temporal vector derived from an adjacent block. In other words, whether there is an overlap between temporal vectors may be confirmed.

Alternatively, for example, an overlap may be checked by using a motion vector (DefaultMV) at the center position of a collocated block derived by using a temporal vector.

Alternatively, for example, an overlap may be checked by using a motion vector in each sub-block unit of a collocated block derived by using a temporal vector. In this case, an overlap check may be performed on the motion vector of all sub-blocks in a collocated block. Alternatively, an overlap check may be performed on a sub-block at a specific position in a collocated block.

An overlap check method described above may be applied to the motion vector of an adjacent block, the motion vector of a non-adjacent block and a zero vector described above. In addition, in order to reduce the complexity of an overlap check, it may be applied only to some candidates. In other words, an overlap check may be performed between predefined specific candidates.

As an example, since an A0 block and an A1 block in FIG. 7 are very adjacent, an overlap check may be applied, and since an A0 block and a B0 block are not adjacent to each other, they may be inferred to have different motion information and an overlap check may not be applied. Alternatively, an overlap check may be applied only to blocks adjacent to each other and an overlap check may not be applied to a non-adjacent block and a zero vector.

FIG. 8 is a diagram for describing a method for checking an overlap between motion vectors according to an embodiment of the present disclosure.

Referring to FIG. 8, an overlap check may be determined by whether to have the same reference picture and the same motion vector, and as an embodiment, when a difference between motion vectors is smaller than a specific threshold value, it may be determined as an overlap candidate.

Specifically, as shown in FIG. 8, motion information in a collocated picture may be stored in a specific unit. For example, motion information in a collocated picture may be stored as motion information in a 8x8 unit. Accordingly, when an overlap check is performed based on a temporal vector, if a difference value between the motion vectors of each candidate is smaller than a specific value, it may exist in the same unit and motion information may overlap.

Accordingly, according to an embodiment, more diverse candidates may be configured by determining whether there is an overlap based on a threshold value. As an example, a threshold value may be predefined or may be defined as a 1-pel, a 1/4 pel, a 1/16 pel, etc.

Hereinafter, a method for determining an optimal candidate among a plurality of SbTMVP candidates derived according to a method described above is described.

Inter prediction may include a sub-block merge mode among the general merge modes. A sub-block merge mode may include a SbTMVP mode and an affine merge mode. When a sub-block merge mode is used, a sub-block merge candidate list including N candidates may be configured. An index specifying a candidate in a candidate list may be signaled. In an embodiment, a candidate list may include one SbTMVP candidate and N-1 affine merge candidates.

According to an embodiment of the present disclosure, although candidates for a SbTMVP increase, the performance of an affine merge candidate may be maintained by finally selecting one SbTMVP candidate and configuring a candidate list as before. For this purpose, a template matching method may be applied. In other words, a candidate having the smallest template matching cost among a plurality of SbTMVP candidates may be selected as a SbTMVP.

A template matching cost may be calculated by using at least one of the following methods. It may be changed and applied by considering trade-off between accuracy and complexity.

- A sum of absolute differences (SAD) or a mean-removed sum of absolute differences (MRSAD) in a template region may be calculated by using a temporal vector derived based on each adjacent/non-adjacent/zero vector. Since it is based on the similarity of a template between a current block and a collocated block derived from a temporal vector, a temporal vector with high reliability may be found. It has an advantage in that it may be calculated without increasing complexity compared to when calculating the DefaultMv and sub-block MV of each candidate.
- A SAD or a MRSAD in a template region between a current block and a reference block indicated by a MV (DefaultMV) at the center position of a collocated block derived by using a temporal vector may be calculated. Since it uses a motion vector for a representative reference block that is actually applied (i.e., used as a prediction sample), it has an advantage in that accuracy as a MVP may be improved compared to when using a temporal vector.
- A SAD or a MRSAD in a template region may be calculated by using a MV in each sub-block unit within a collocated block derived by using a temporal vector. Since it uses a motion vector actually applied in each sub-block unit, it has the highest accuracy as a MVP, but it may increase complexity relatively. In this case, since all sub-blocks may not have a template region according to the position of a sub-block in a current block, in an embodiment, a template matching cost may be calculated by targeting only a sub-block adjacent to the left and the top of a current block.

When a template matching cost is calculated in a CU unit (i.e., a current block), a template region may be determined as WxN or NxH. W and H represent the width and height of a CU, respectively. N may be determined as 1, 2, 4, etc. by considering the complexity of calculation and the size of a block. When a template matching cost is calculated in a sub-block unit, for a template region, all or part of WxM and MxH may be used. M may be determined as 1, 2, 4, etc. by considering the complexity of calculation and the size of a block.

In addition, a method described above may be changed and applied as follows. When the number of sub-block merge candidates increases and performance is improved as a variety of candidates are considered, a plurality of candidates among the SbTMVP candidates configured in an embodiment above may be used as a final sub-block merge candidate. As an example, a sub-block merge candidate list may be configured with two SbTMVP candidates. In this case, among the SbTMVP candidates derived as two SbTMVP candidates, a candidate with the smallest template matching cost and a candidate with the second smallest template matching cost may be selected.

Specifically, a signaling method for a SbTMVP may be changed and applied as follows. For example, a sub-block merge candidate list may be configured as in Table 1 below.

[Table 1]

| Sub-block merge candidate index | Method 1 | Method 2 | |
|---|---|---|---|
| | | SbTMVPFlag == 1 | SbTMVPFlag == 0 |
| 0 | Subblock Cand[0] : SbTMVP Cand[0] | SbTMVP Cand[0] | Affine Cand [0] |
| 1 | Subblock Cand[1] : SbTMVP Cand[1] | SbTMVP Cand[1] | Affine Cand [1] |
| 2 | Subblock Cand[2] : Affine Cand[0] | SbTMVP Cand[..] | Affine Cand [2] |
| 3 | Subblock Cand[3] : Affine Cand[1] | | Affine Cand [3] |
| ... | Subblock Cand[...] : Affine Cand[..] | | Affine Cand [...] |
| N-1 | Subblock Cand[N-1] : Affine Cand[M-1] | | Affine Cand [N-1] |

Referring to Table 1, as in an example of Method 1, a certain number (e.g., 2) of SbTMVP candidates may be added to a sub-block merge candidate list and then, an affine merge candidate may be added.

In addition, a flag indicating whether a sub-block merge candidate list includes a SbTMVP candidate may be signaled. In other words, as in an example of Method 2, the configuration of a sub-block merge candidate list may be changed by a flag (SbTMVPFlag) signaling whether a SbTMVP is present when it is in a sub-block merge mode. When SbTMVPFlag is 1, a SbTMVP candidate list may be configured, and when SbTMVPFlag is 0, an affine candidate list may be configured.

Since Method 1 in Table 1 may add an affine merge candidate to a sub-block merge candidate list when there is no or only one SbTMVP candidate, it may prevent waste in terms of signaling bit efficiency. Meanwhile, Method 2 has an advantage that it may consider various candidates for a SbTMVP mode simultaneously with maintaining the same bit usage for an affine candidate, instead of adding SbTMVPFlag. In an embodiment, Method 2 may be configured to generate as many SbTMVP candidates as the maximum number of candidates for a SbTMVP candidate list in order to prevent the unnecessary transmission of SbTMVPFlag.

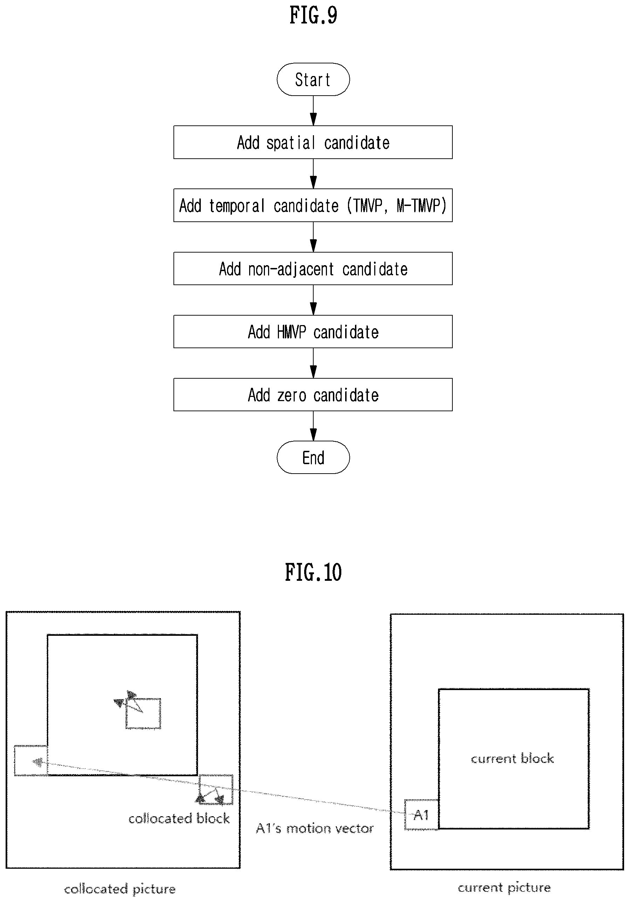

FIG. 9 is a flowchart illustrating a method for configuring a merge candidate list according to an embodiment of the present disclosure.

A SbTMVP operates as a partial tool of a sub-block merge mode among the general merge modes in that it predicts motion information in a sub-block unit. Unlike a TMVP, a SbTMVP does not acquire motion information at a determined position, so it may perform more accurate motion prediction. Accordingly, according to an embodiment of the present disclosure, a method is proposed for applying a SbTMVP which is the same as a SbTMVP described above, but derives motion information in a coding block unit, not in a sub-block unit, as one of the candidates for a regular merge mode. In the present disclosure, a SbTMVP excluding a derivation method in a sub-block unit is referred to as a Moved-TMVP (M-TMVP). A name is not limited thereto, and a M-TMVP may be simply referred to as a TMVP.

Referring to FIG. 9, a merge candidate list according to a regular merge mode may be configured. A merge candidate list may include a spatial candidate, a temporal candidate, a non-adjacent candidate, a history-based motion vector predictor (HMVP) and a zero candidate. As an example, they may be inserted into a merge candidate list in the order of a spatial candidate, a temporal candidate, a non-adjacent candidate, a HMVP and a zero candidate.

In this case, a temporal candidate may include a M-TMVP according to this embodiment together with the existing TMVP. As an embodiment, a modification such as a TMVP being replaced with a M-TMVP or a candidate with higher compression efficiency of a TMVP and a M-TMVP being selected may be performed. In this case, template matching may be used to determine a candidate with high compression efficiency. In addition, a M-TMVP may be added to a merge candidate list in order different from that in FIG. 9.

A method described in FIGS. 5 and 6 above may be applied equally to deriving a M-TMVP. As described above, a M-TMVP may derive motion information in a block unit, not in a sub-block unit. In this case, a block unit may be a coding block unit. Accordingly, in a method described in FIGS. 5 and 6 above, a step of deriving a motion vector in a sub-block unit may be omitted or replaced with a step of deriving a motion vector in a block unit. In a method described in FIGS. 5 and 6 above, an operation excluding a step of deriving a motion vector in a sub-block unit may be also applied equally to a M-TMVP and an overlapping description related thereto is omitted.

FIG. 10 is a diagram illustrating a method for deriving a temporal merge candidate according to an embodiment of the present disclosure.

Referring to FIG. 10, it may be changed to collect a variety of motion information different from the existing motion vector for a M-TMVP that does not derive motion information in a sub-block unit. FIG. 10 assumes a case in which the motion vector of a left neighboring block adjacent to the left of a bottom-left sample of a current block is used as a temporal vector to specify a collocated block, but a neighboring block at a variety of positions described in FIGS. 6 and 7 above as well as a left neighboring block may be used as a temporal vector candidate.

When a M-TMVP is used, the position of a collocated block may be changed and applied as follows in order to use more diverse motion information for prediction. In other words, in a process for deriving a collocated block by using the motion vector and temporal vector of an adjacent block, a motion vector at the bottom-right position of a block may be determined as the motion vector of a collocated block (ColMv). Alternatively, when it is not available after checking a bottom-right position, a motion vector at a center position may be determined as ColMv.

A M-TMVP proposed in this embodiment may be applied not only to a regular merge mode, but also to an AMVP mode, and of course, it may be applied to a variety of inter prediction modes configuring a MVP.

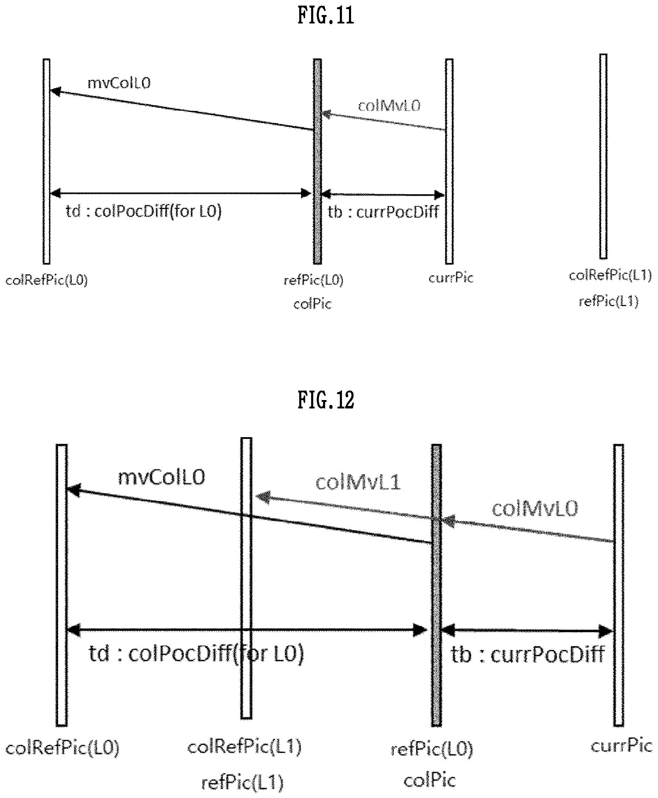

FIG. 11 is a diagram illustrating a method for deriving motion information from a reference block according to an embodiment of the present disclosure.

In a process for deriving a SbTMVP, the motion vector (or motion information) of each sub-block existing in a collocated block may exist in various types. For example, a unidirectional prediction block or a bidirectional prediction block may exist, or it may have a motion vector in the same direction as a collocated picture, or it may have a motion vector in the opposite direction to a collocated picture.

Referring to FIG. 11, when each sub-block existing in a collocated block is a unidirectional prediction block (i.e., only mvColL0 exists) and is a random access (RA) condition, the motion vector of a current block may be derived from a collocated block as shown in FIG. 11.

When a current picture is a RA condition, the motion vector mvColL0 of a collocated block existing in a collocated picture may be used to derive colMvL0, the MVP of a current block. As shown in FIG. 11, final colMvL0 may be derived by using a ratio of a distance between a current picture (currPic) and a reference picture (refPic(L0)) and a distance between a collocated picture (colPic) and the reference picture of a collocated picture (colRefPic(L0)).

FIG. 12 is a diagram illustrating a method for deriving motion information from a reference block according to an embodiment of the present disclosure.

Referring to FIG. 12, when each sub-block existing in a collocated block is a unidirectional prediction block (i.e., only mvColL0 exists) and is a low delay (LD) condition, the motion vector of a current block may be derived from a collocated block as shown in FIG. 12.

When a current picture is a LD condition, the motion vector mvColL0 of a collocated block existing in a collocated picture may be used to derive colMvLX, X = 0, 1 as shown in FIG. 12. Final colMvLX may be derived by using a ratio of a distance between a current picture (currPic) and each reference picture (refPic(LX), X is 0 or 1) and a distance between a collocated picture (colPic) and the reference picture of each collocated picture (colRefPic(LX)).

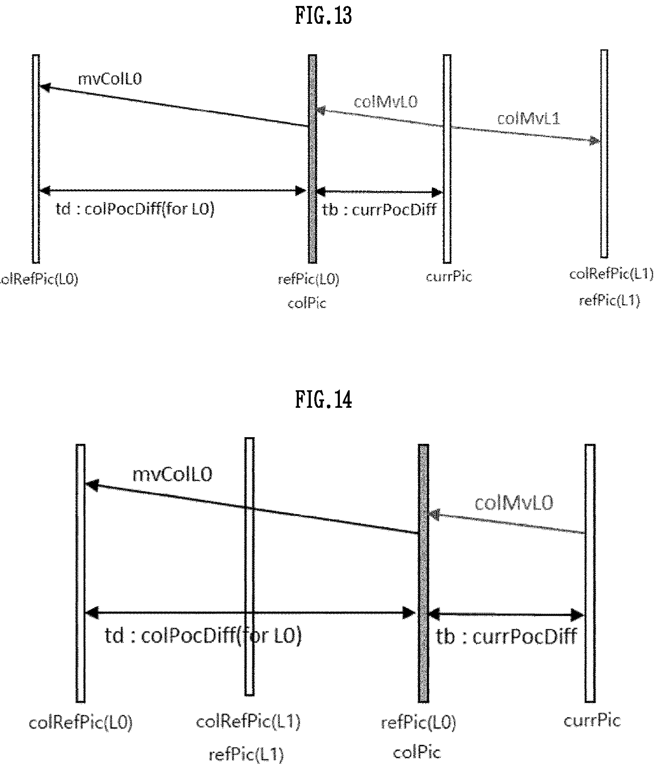

Generally, in video codec, the purpose of bidirectional prediction is to bring a smoothing effect through an average between reference blocks and improve compression performance by increasing the accuracy of prediction through two motion information, so in this embodiment, a method for improving compression performance by changing the above-described process for deriving colMv to generate a bidirectional prediction block is described in FIGS. 13 and 14.

FIG. 13 is a diagram illustrating a method for deriving motion information from a reference block according to an embodiment of the present disclosure.

A method for deriving colMv under a RA condition described in FIG. 11 above may be changed and applied as shown in FIG. 13.

Referring to FIG. 13, mvColL0 may be used to derive colMvL1 as well as colMvL0. Similarly, colMvL1 may be derived by using a directionality and a distance ratio with a reference picture. In this case, colMvL1 is opposite to colMvL0 in a direction, and may be derived by scaling the absolute value of colMvL0 according to a distance ratio between reference pictures.

In addition, as an example, when DefaultMV includes bidirectional motion information, a motion vector may be configured by using the L(1-X) motion vector of DefaultMv for a sub-block that performs LX unidirectional prediction. Through this, a bidirectional prediction effect may be expected.

FIG. 14 is a diagram illustrating a method for deriving motion information from a reference block according to an embodiment of the present disclosure.

A method for deriving colMv under a LD condition described in FIG. 12 above may be changed and applied as shown in FIG. 14.

Referring to FIG. 14, under a LD condition, a unidirectional prediction block may be configured to have only a unidirectional motion without being forcibly converted to a bidirectional prediction mode. It may reduce the complexity of calculation and maintain uniformity with a RA.

Alternatively, as an example, it may be applied without considering a RA/LD condition as follows. For example, when the motion information of a unidirectional prediction block is applied to a current block, a motion vector may be scaled and applied to a reference picture having a close distance between a current picture and a reference picture.

In addition, according to an embodiment of the present disclosure, information specifying a collocated picture may be signaled based on a higher level syntax. Regarding the existing technology, a TMVP and a SbTMVP determine a collocated picture based on information parsed from a picture header and a slice header as in Tables 2 and 3 below. Signaled information is applied equally to all temporal candidate derivation processes. Table 2 represents a picture header syntax and Table 3 represents a slice header syntax.

[Table 2]

| | |
|---|---|
| if( sps_temporal_mvp_enabled_flag ) { | |
| **ph_temporal_mvp_enabled_flag** | u(1) |
| if( ph_temporal_mvp_enabled_flag && pps_rpl_info_in_ph_flag ) { | |
| if( num_ref_entries[ 1 ][ RplsIdx[ 1 ] ] > 0 ) | |
| **ph_collocated_from_l0_flag** | u(1) |
| if( ( ph_collocated_from_10_flag && num_ref_entries[ 0 ][ RplsIdx[ 0 ] ] > 1 ) \|\| ( !ph_collocated_from_l0_flag && num_ref_entries[ 1 ][ RplsIdx[ 1 ] ] > 1 ) ) | |
| **ph_collocated_ref_idx** | ue(v) |
| } | |
| } | |

[Table 3]

| | |
|---|---|
| if( ph_temporal_mvp_enabled_flag && !pps_rpl_info_in_ph_flag ) { | |
| if( sh_slice_type == B) | |
| **sh_collocated_from_l0_flag** | u(1) |
| if( ( sh_collocated_from_10_flag && NumRefIdxActive[ 0 ] > 1 ) \|\| | |

(continued)

| | |
|---|---|
| ( ! sh_collocated_from_10_flag && NumRefIdxActive[ 1 ] > 1 ) ) | |
| **sh_collocated_ref_idx** | ue(v) |
| } | |

Referring to Tables 2 and 3, according to the existing technology, a TMVP and a SbTMVP derive a temporal candidate by using only the same collocated picture even though their characteristic is different, so there is a problem that a different characteristic between a TMVP and a SbTMVP is not effectively reflected.

Accordingly, an embodiment of the present disclosure may signal the collocated picture of SbTMVP separately from a TMVP so that a SbTMVP may have a separate collocated picture. As an embodiment, as in Tables 4 and 5 below, the collocated picture of a SbTMVP may be signaled separately from a TMVP.

[Table 4]

| | |
|---|---|
| if( sps_temporal_mvp_enabled_flag ) { | |
| **ph_temporal_mvp_enabled_flag** | u(1) |
| if( ph_temporal_mvp_enabled_flag && pps_rpl_info_in_ph_flag ) { | |
| if( num_ref_entries[ 1 ][ RplsIdx[ 1 ] ] > 0 ) { | |
| **ph_collocated_from_l0_flag** | u(1) |
| if( sps_sbtmvp_enabled_flag ) | |
| **ph_sb_collocated_from_l0_flag** | u(1) |
| } | |
| if( ( ph_collocated_from_l0_flag && num_ref_entries[ 0 ][ RplsIdx[ 0 ] ] > 1 ) \|\| ( !ph_collocated_from_l0_flag && num_ref_entries[ 1 ][ RplsIdx[ 1 ] ] > 1 ) ) | |
| **ph_collocated_ref_idx** | ue(v) |
| if( ( ph_sb_collocated_from_10_flag && num_ref_entries[ 0 ][ RplsIdx[ 0 ] ] > 1 ) \|\| ( !ph_sb_collocated_from_10_flag && num_ref_entries[ 1 ][ RplsIdx[ 1 ] ] > 1 ) ) | |
| **ph_sb_collocated_ref_idx** | ue(v) |
| } | |
| } | |

[Table 5]

| | |
|---|---|
| if( ph_temporal_mvp_enabled_flag && !pps_rpl_info_in_ph_flag ) { | |
| if( sh_slice_type = = B) { | |
| **sh_collocated_from_l0_flag** | u(1) |
| if( sps_sbtmvp_enabled_flag ) | |
| **sh_sb_collocated_from_l0_flag** | u(1) |
| } | |
| if( ( sh_collocated_from_10_flag && NumRefIdxActive[ 0 ] > 1 ) \|\| ( ! sh_collocated_from_10_flag && NumRefIdxActive[ 1 ] > 1 ) ) | |
| **sh_collocated_ref_idx** | ue(v) |
| if( ( sh_sb_collocated_from_10_flag && NumRefIdxActive[ 0 ] > 1 ) | |

(continued)

| ( ! sh_sb_collocated_from_10_flag && NumRefIdxActive[ 1 ] > 1 ) ) | |
|---|---|
| **sh_sb_collocated_ref_idx** | ue(v) |
| } | |

Table 4 represents a picture header syntax and Table 5 represents a slice header syntax. Referring to Table 4, syntax elements ph_sb_collocated_from_10_flag and ph_sb_collocated_ref_idx showing a collocated picture for a SbTMVP may be defined/signaled. Referring to Table 5, syntax elements sh_sb_collocated_from_10_flag and sh_sb_collocated_ref_idx showing a collocated picture for a SbTMVP may be defined/signaled.

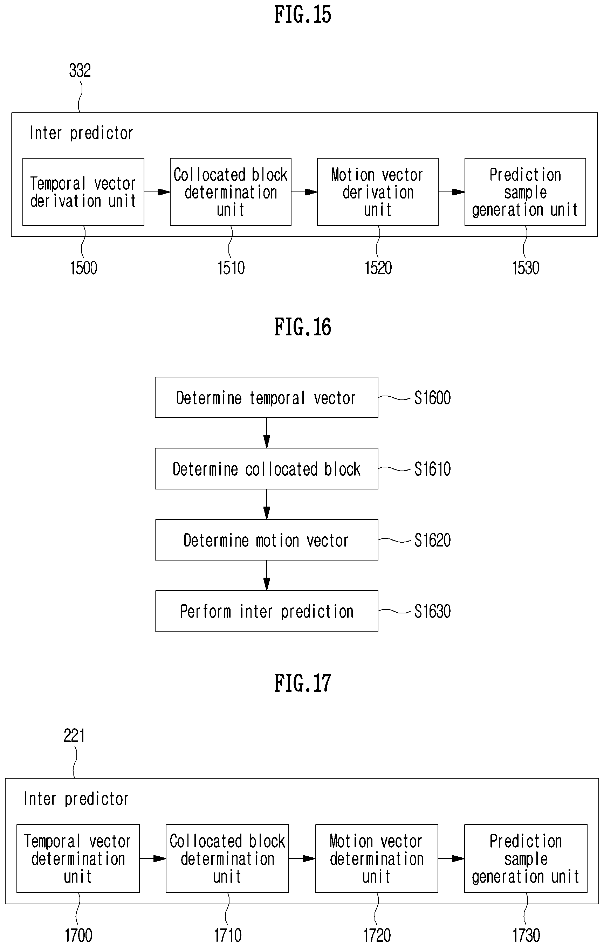

FIG. 15 shows a schematic configuration of an inter predictor 332 performing an inter prediction method according to the present disclosure.

Referring to FIG. 15, an intra predictor 331 may include a temporal vector derivation unit 1500, a collocated block determination unit 1510, a motion vector derivation unit 1520 and a prediction sample generation unit 1530.

A temporal vector derivation unit 1500 may derive the temporal vector of a current block based on the motion vector of one candidate in a candidate group including a plurality of candidates.

Unlike a TMVP which derives the motion information of a block at a predefined position (i.e., the bottom-right position or the center position of a current block) within a pre-determined reference picture (or a collocated picture, colPic) as a motion vector predictor (MVP), a SbTMVP in a sub-block merge mode may use the motion information of a collocated block (or a col block) derived from the motion information of a neighboring block (e.g., the left neighboring block of a current block) as the MVP of a current block and derive a MVP in a sub-block unit.

An improvement method in a SbTMVP derivation process considering a variety of temporal vectors for specifying a collocated block may be applied. A proposed method may be applied not only to a process for deriving a sub-block-based MVP, but also to a process for deriving a MVP in a MERGE/AMVP process substantially in the same manner.

As described above, in order to improve the performance of the existing SbTMVP that uses the motion information of a collocated block derived from the motion information of a left neighboring block as a MVP, an optimal MVP may be derived by considering various motion information derived from multiple neighboring blocks. In this case, a method described in FIGS. 6 and 7 may be applied. In this regard, an overlapping description is omitted.

In addition, as described above, in adding a candidate group to a candidate based on multiple neighboring blocks, an overlap check for whether it has a motion vector that overlaps with a candidate previously included in a candidate group may be performed. As an example, as described in FIG. 8 above, whether there is an overlap may be determined based on a comparison between a difference between motion vectors and a threshold value.

A collocated block determination unit 1510 may determine (or specify) the collocated block of a current block in a collocated picture based on a derived temporal vector. As an example, a collocated picture may be defined equally to an encoding device and a decoding device. Alternatively, as an example, a collocated picture may be signaled through a higher level syntax. The collocated block of a current block may be determined by a temporal vector within a collocated picture.

A motion vector derivation unit 1520 may derive the motion vector of a current block in a sub-block unit based on the motion vector of a collocated block. In other words, a motion vector derivation unit 1520 may derive (or determine) the motion vector of a sub-block in a collocated block specified by a temporal vector as the motion vector of a corresponding sub-block in a current block.

A prediction sample generation unit 1530 may perform inter prediction for a current block based on the motion vector of a current block. A prediction sample generation unit 1530 may generate the prediction block of a current block by performing inter prediction based on motion information derived in a sub-block unit within a current block. As an embodiment, the prediction block of a current block may be generated in a sub-block unit according to motion information derived in a sub-block unit.

FIG. 16 shows an inter prediction method performed by an encoding device 200 as an embodiment of the present disclosure.

In an embodiment of the present disclosure, an inter prediction method performed by an encoding device is described. In performing inter prediction by using a SbTMVP, an embodiment described in FIG. 4 to FIG. 15 above may be applied in substantially the same manner, and in this case, an overlapping description is omitted.

Referring to FIG. 16, an encoding device may determine the temporal vector of a current block based on the motion vector of one candidate in a candidate group including a plurality of candidates S1601.

Unlike a TMVP which derives the motion information of a block at a predefined position (i.e., the bottom-right position or the center position of a current block) within a pre-determined reference picture (or a collocated picture, colPic) as a motion vector predictor (MVP), a SbTMVP in a sub-block merge mode may use the motion information of a collocated block (or a col block) derived from the motion information of a neighboring block (e.g., the left neighboring block of a current block) as the MVP of a current block and derive a MVP in a sub-block unit.

An improvement method in a SbTMVP derivation process considering a variety of temporal vectors for specifying a collocated block may be applied. A proposed method may be applied not only to a process for deriving a sub-block-based MVP, but also to a process for deriving a MVP in a MERGE/AMVP process substantially in the same manner.

As described above, in order to improve the performance of the existing SbTMVP that uses the motion information of a collocated block derived from the motion information of a left neighboring block as a MVP, an optimal MVP may be derived by considering various motion information derived from multiple neighboring blocks. In this case, a method described in FIGS. 6 and 7 may be applied. In this regard, an overlapping description is omitted.

In addition, as described above, in deriving an optimal MVP, a template matching method may be applied.

In addition, as described above, in adding a candidate group to a candidate based on multiple neighboring blocks, an overlap check for whether it has a motion vector that overlaps with a candidate previously included in a candidate group may be performed. As an example, as described in FIG. 8 above, whether there is an overlap may be determined based on a comparison between a difference between motion vectors and a threshold value.

An encoding device may determine (or specify) the collocated block of a current block in a collocated picture based on a derived temporal vector S 1610. As an example, a collocated picture may be defined equally to an encoding device and a decoding device. Alternatively, as an example, a collocated picture may be signaled through a higher level syntax. The collocated block of a current block may be determined by a temporal vector within a collocated picture.

An encoding device may derive the motion vector of a current block in a sub-block unit based on the motion vector of a collocated block S1620. In other words, an encoding device may derive (or determine) the motion vector of a sub-block in a collocated block specified by a temporal vector as the motion vector of a corresponding sub-block in a current block.

An encoding device may perform inter prediction for a current block based on the motion vector of a current block S1630. An encoding device may generate the prediction block of a current block by performing inter prediction based on motion information derived in a sub-block unit within a current block. As an embodiment, the prediction block of a current block may be generated in a sub-block unit according to motion information derived in a sub-block unit.

FIG. 17 shows a schematic configuration of an inter predictor 221 performing an inter prediction method according to the present disclosure.

Referring to FIG. 17, an inter predictor 221 may include a temporal vector determination unit 1700, a collocated block determination unit 1710, a motion vector determination unit 1720 and a prediction sample generation unit 1730.

Specifically, a temporal vector determination unit 1700 may determine the temporal vector of a current block based on the motion vector of one candidate in a candidate group including a plurality of candidates.

Unlike a TMVP which derives the motion information of a block at a predefined position (i.e., the bottom-right position or the center position of a current block) within a pre-determined reference picture (or a collocated picture, colPic) as a motion vector predictor (MVP), a SbTMVP in a sub-block merge mode may use the motion information of a collocated block (or a col block) derived from the motion information of a neighboring block (e.g., the left neighboring block of a current block) as the MVP of a current block and derive a MVP in a sub-block unit.

An improvement method in a SbTMVP derivation process considering a variety of temporal vectors for specifying a collocated block may be applied. A proposed method may be applied not only to a process for deriving a sub-block-based MVP, but also to a process for deriving a MVP in a MERGE/AMVP process substantially in the same manner.

As described above, in order to improve the performance of the existing SbTMVP that uses the motion information of a collocated block derived from the motion information of a left neighboring block as a MVP, an optimal MVP may be derived by considering various motion information derived from multiple neighboring blocks. In this case, a method described in FIGS. 6 and 7 may be applied. In this regard, an overlapping description is omitted.

In addition, as described above, in deriving an optimal MVP, a template matching method may be applied.

In addition, as described above, in adding a candidate group to a candidate based on multiple neighboring blocks, an overlap check for whether it has a motion vector that overlaps with a candidate previously included in a candidate group may be performed. As an example, as described in FIG. 8 above, whether there is an overlap may be determined based on a comparison between a difference between motion vectors and a threshold value.

A collocated block determination unit 1710 may determine (or specify) the collocated block of a current block in a collocated picture based on a derived temporal vector. As an example, a collocated picture may be defined equally to an encoding device and a decoding device. Alternatively, as an example, a collocated picture may be signaled through a higher level syntax. The collocated block of a current block may be determined by a temporal vector within a collocated picture.

A motion vector determination unit 1720 may derive the motion vector of a current block in a sub-block unit based on the motion vector of a collocated block. In other words, a motion vector determination unit 1720 may derive (or determine) the motion vector of a sub-block in a collocated block specified by a temporal vector as the motion vector of a corresponding sub-block in a current block.

A prediction sample generation unit 1730 may perform inter prediction for a current block based on the motion vector of a current block. A prediction sample generation unit 1730 may generate the prediction block of a current block by performing inter prediction based on motion information derived in a sub-block unit within a current block. As an embodiment, the prediction block of a current block may be generated in a sub-block unit according to motion information derived in a sub-block unit.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding device and/or a decoding device according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding device and an encoding device to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Intemet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

FIG. 12 shows an example of a contents streaming system to which embodiments of the present disclosure may be applied.

Referring to FIG. 12, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1.    An image decoding method, the method comprising:

   deriving a temporal vector of a current block based on a motion vector of one candidate in a candidate group including a plurality of candidates;
   determining a collocated block of the current block in a collocated picture based on the temporal vector;
   deriving a motion vector of the current block in a sub-block unit based on a motion vector of the collocated block; and
   performing an inter prediction for the current block based on the motion vector of the current block.

2.    The method of claim 1, wherein:
   the candidate group includes an adjacent spatial neighboring block of the current block and a non-adjacent spatial neighboring block of the current block as a candidate.

3.    The method of claim 2, wherein:
   the non-adjacent spatial neighboring block includes a first block including a sample separated by a value obtained by multiplying a height of the current block by 2 from a top-left sample adjacent to a top-left corner of the current block within a left sample line adjacent to the current block and a second block including a sample separated by a value obtained by multiplying a width of the current block by 2 from the top-left sample within a top sample line adjacent to the current block.

4.    The method of claim 1, wherein:
   the one candidate is selected among the plurality of candidates included in the candidate group based on a template matching.

5.    The method of claim 4, wherein:
   a cost of the template matching is calculated based on a sum of absolute differences (SAD) or a mean-removed sum of absolute differences (MRSAD) between a template region of the current block and a template region of a block specified by a motion vector of the plurality of candidates included in the candidate group.

6.    The method of claim 4, wherein:
   a cost of the template matching is calculated based on a sum of absolute differences (SAD) or a mean-removed sum of absolute differences (MRSAD) between a template region of the current block and a template region of a block specified by a motion vector of a sub-block or a block derived based on the plurality of candidates included in the candidate group.

7.    The method of claim 1, further comprising:

configuring the candidate group including the plurality of candidates based on a neighboring block of the current block,

wherein the candidate group is configured by adding a neighboring block at a specific position to the candidate group in a predefined order.

8. The method of claim 7, wherein:
configuring the candidate group includes confirming whether a motion vector of the neighboring block at the specific position overlaps with a motion vector of a candidate previously included in the candidate group.

9. The method of claim 8, wherein:
whether there is the overlap is determined based on whether a difference between the motion vector of the candidate previously included in the candidate group and the motion vector of the neighboring block at the specific position is smaller than a predefined threshold value.

10. The method of claim 1, wherein:

the collocated picture is determined based on a syntax element signaled through at least one syntax of a picture header or a slice header,

the syntax element is signaled separately from a syntax element indicating a collocated picture for a temporal motion vector predictor.

11. An image encoding method, the method comprising:

determining a temporal vector of a current block based on a motion vector of one candidate in a candidate group including a plurality of candidates;

determining a collocated block of the current block in a collocated picture based on the temporal vector;

determining a motion vector of the current block in a sub-block unit based on a motion vector of the collocated block; and

performing an inter prediction for the current block based on the motion vector of the current block.

12. A computer readable storage medium storing a bitstream generated by an image encoding method according to claim 11.

13. A method for transmitting data for image information, the method comprising:

determining a temporal vector of a current block based on a motion vector of one candidate in a candidate group including a plurality of candidates;

determining a collocated block of the current block in a collocated picture based on the temporal vector;

determining a motion vector of the current block in a sub-block unit based on a motion vector of the collocated block;

generating a prediction sample of the current block by performing an inter prediction for the current block based on the motion vector of the current block;

generating a bitstream by encoding the current block based on the prediction block; and

transmitting data including the bitstream.

FIG.1

FIG.2

EP 4 550 791 A1

FIG.3

## FIG.4

```
┌─────────────────────────┐
│   Derive temporal vector │ ─── S400
└─────────────────────────┘
            │
            ▼
┌─────────────────────────┐
│ Determine collocated block │ ─── S410
└─────────────────────────┘
            │
            ▼
┌─────────────────────────┐
│    Derive motion vector  │ ─── S420
└─────────────────────────┘
            │
            ▼
┌─────────────────────────┐
│  Perform inter prediction │ ─── S430
└─────────────────────────┘
```

# FIG.5

```
                    ┌─────────────┐
                    │    Start    │
                    └──────┬──────┘
                           │
                           ▼
              ┌──────────────────────────┐
              │   Check availability     │
              │   of neighboring block   │
              └────────────┬─────────────┘
                           │
                           ▼
                    ╱─────────────╲
                   ╱      Is        ╲      Yes
                  ╱  neighboring block ╲──────────────┐
                  ╲    available?     ╱               │
                   ╲────────┬────────╱                │
                           │ No                       │
                           ▼                          ▼
         ┌──────────────────────────┐   ┌──────────────────────────┐
         │    Temporal vector =     │   │  Temporal vector = (0,0) │
         │  MV of neighboring block │   └────────────┬─────────────┘
         └────────────┬─────────────┘                │
                      │◄─────────────────────────────┘
                      ▼
         ┌──────────────────────────┐
         │   Derive collocated block│
         └────────────┬─────────────┘
                      │
                      ▼
               ╱─────────────╲
              ╱      Is        ╲      Yes
             ╱   DefaultMV       ╲──────────────┐
             ╲   available?     ╱               │
              ╲────────┬───────╱                │
                      │ No                      │
                      ▼                         │
   ┌───────────────────────────────────┐        │
   │ Derive sub-block-based motion vector│       │
   └────────────┬──────────────────────┘        │
                │◄──────────────────────────────┘
                ▼
         ┌─────────────┐
         │     End     │
         └─────────────┘
```

# FIG.6

```
                        ( Start )
                            │
                            ▼
              ┌──────────────────────────────┐
              │        i=0,  iCand=0          │
              │ Cand[K]={A1,B1,B0,A0,B2,D0,D1}│
              └──────────────────────────────┘
                            │
                            ▼
i++    ◄──────────◇  i < = K - 1?  ◇──────────►  Yes
                            │        No                    │
                            ▼                              │
Yes  ◄──────────◇  Is Cand[i]  ◇                           │
                    │  available?                          │
                    │      No                              │
                    ▼                                      ▼
        ┌────────────────────────┐      ┌──────────────────────────────┐
        │ Temporal vector[iCand] = │      │ Temporal vector[iCand] = (0,0) │
        │      MV of Cand[i]       │      └──────────────────────────────┘
        └────────────────────────┘                  │
                    │◄────────────────────────────────┘
                    ▼
        ┌────────────────────────┐
        │  Derive collocated block │
        └────────────────────────┘
                    │
                    ▼
Yes ◄──────────◇        Is         ◇
                 │ DefaultMV available? │
                 │    No │ iCand++
                 ▼
Yes ◄──────────◇  iCand>=MAX_N  ◇
                 │      UM?
                 │      No
                 ▼
        ┌──────────────────────────────┐
        │ Derive template matching-based │
        │      optimal candidate         │
        └──────────────────────────────┘
                    │
                    ▼
        ┌──────────────────────────────┐
        │    Derive sub-block-based      │
        │       motion vector            │
        └──────────────────────────────┘
                    │
                    ▼
                ( End )
```

## FIG.7

## FIG.8

collocated picture

current picture

## FIG.9

```
        ┌─────────┐
        │  Start  │
        └─────────┘
             │
             ▼
┌───────────────────────────────┐
│     Add spatial candidate      │
└───────────────────────────────┘
             │
             ▼
┌───────────────────────────────────┐
│ Add temporal candidate (TMVP, M-TMVP) │
└───────────────────────────────────┘
             │
             ▼
┌───────────────────────────────┐
│   Add non-adjacent candidate   │
└───────────────────────────────┘
             │
             ▼
┌───────────────────────────────┐
│      Add HMVP candidate        │
└───────────────────────────────┘
             │
             ▼
┌───────────────────────────────┐
│      Add zero candidate        │
└───────────────────────────────┘
             │
             ▼
        ┌─────────┐
        │   End   │
        └─────────┘
```

## FIG.10

collocated block        A1's motion vector        current block / -A1

collocated picture        current picture

## FIG.11

mvColL0

colMvL0

td : colPocDiff(for L0)

tb : currPocDiff

colRefPic(L0)

refPic(L0)
colPic

currPic

colRefPic(L1)
refPic(L1)

## FIG.12

mvColL0

colMvL1

colMvL0

td : colPocDiff(for L0)

tb : currPocDiff

colRefPic(L0)

colRefPic(L1)
refPic(L1)

refPic(L0)
colPic

currPic

## FIG.13

## FIG.14

FIG.15

332

Inter predictor

| Temporal vector derivation unit | → | Collocated block determination unit | → | Motion vector derivation unit | → | Prediction sample generation unit |

1500 · 1510 · 1520 · 1530

FIG.16

Determine temporal vector — S1600

Determine collocated block — S1610

Determine motion vector — S1620

Perform inter prediction — S1630

FIG.17

221

Inter predictor

| Temporal vector determination unit | → | Collocated block determination unit | → | Motion vector determination unit | → | Prediction sample generation unit |

1700 · 1710 · 1720 · 1730

# FIG.18

Smartphone

Camcorder/camera

Encoding server

Web server

Streaming server

Media storage

Wired and wireless communication

Wired and wireless communication

User equipment

Game console

PC

Set top box

Smartphone

EP 4 550 791 A1

## INTERNATIONAL SEARCH REPORT

| International application No. |
|---|
| **PCT/KR2023/009336** |

| A. | CLASSIFICATION OF SUBJECT MATTER |
|---|---|

**H04N 19/52**(2014.01)i; **H04N 19/105**(2014.01)i; **H04N 19/132**(2014.01)i; **H04N 19/176**(2014.01)i; **H04N 19/70**(2014.01)i

According to International Patent Classification (IPC) or to both national classification and IPC

| B. | FIELDS SEARCHED |
|---|---|

Minimum documentation searched (classification system followed by classification symbols)

H04N 19/52(2014.01); H04N 19/105(2014.01); H04N 19/109(2014.01); H04N 19/119(2014.01); H04N 19/513(2014.01); H04N 19/70(2014.01); H04N 19/96(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 움직임 벡터(motion vector), 참조 블록(reference block), 서브 블록(sub-block), 템플릿(template)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0130453 A (LG ELECTRONICS INC.) 18 November 2020 (2020-11-18)<br>See paragraphs [0044], [0174]-[0176], [0261], [0263] and [0270]; claims 1 and 4; and figures 15-16 and 24. | 1,7-13 |
| Y | | 2-6 |
| Y | US 2021-0266589 A1 (MEDIATEK INC.) 26 August 2021 (2021-08-26)<br>See paragraphs [0043]-[0045], [0111]-[0114] and [0129]; and figure 16. | 2-3 |
| Y | US 2021-0021824 A1 (SZ DJI TECHNOLOGY CO., LTD.) 21 January 2021 (2021-01-21)<br>See paragraphs [0097], [0100]-[0101] and [0111]; and figure 3. | 4-6 |
| A | WO 2021-133899 A1 (BEIJING DAJIA INTERNET INFORMATION TECHNOLOGY CO., LTD.) 01 July 2021 (2021-07-01)<br>See paragraphs [0151]-[0152]; and figures 14-15. | 1-13 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 October 2023** | **18 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/009336** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0035036 A (SK TELECOM CO., LTD.) 31 March 2021 (2021-03-31)<br>See claims 1-7. | 1-13 |

Form PCT/ISA/210 (second sheet) (July 2022)

**INTERNATIONAL SEARCH REPORT**
Information on patent family members

International application No.

**PCT/KR2023/009336**

| Patent document cited in search report | | | Publication date (day/month/year) | Patent family member(s) | | | Publication date (day/month/year) |
|---|---|---|---|---|---|---|---|
| KR | 10-2020-0130453 | A | 18 November 2020 | CN | 112204964 | A | 08 January 2021 |
| | | | | EP | 3764643 | A1 | 13 January 2021 |
| | | | | EP | 3764643 | B1 | 31 May 2023 |
| | | | | JP | 2021-517798 | A | 26 July 2021 |
| | | | | KR | 10-2023-0028586 | A | 28 February 2023 |
| | | | | KR | 10-2502175 | B1 | 21 February 2023 |
| | | | | US | 11632565 | B2 | 18 April 2023 |
| | | | | US | 2023-0209082 | A1 | 29 June 2023 |
| | | | | WO | 2019-194514 | A1 | 10 October 2019 |
| US | 2021-0266589 | A1 | 26 August 2021 | CN | 112585972 | A | 30 March 2021 |
| | | | | EP | 3831062 | A1 | 09 June 2021 |
| | | | | US | 11503329 | B2 | 15 November 2022 |
| | | | | WO | 2020-035029 | A1 | 20 February 2020 |
| US | 2021-0021824 | A1 | 21 January 2021 | CN | 115037942 | A | 09 September 2022 |
| | | | | EP | 3783897 | A1 | 24 February 2021 |
| | | | | JP | 2023-110048 | A | 08 August 2023 |
| | | | | JP | 7294753 | B2 | 20 June 2023 |
| | | | | KR | 10-2020-0134319 | A | 01 December 2020 |
| | | | | US | 11490120 | B2 | 01 November 2022 |
| | | | | US | 2022-0353527 | A1 | 03 November 2022 |
| | | | | WO | 2019-192152 | A1 | 10 October 2019 |
| WO | 2021-133899 | A1 | 01 July 2021 | CN | 115004702 | A | 02 September 2022 |
| | | | | CN | 115514971 | A | 23 December 2022 |
| | | | | EP | 4082202 | A1 | 02 November 2022 |
| | | | | US | 2022-0329846 | A1 | 13 October 2022 |
| KR | 10-2021-0035036 | A | 31 March 2021 | None | | | |

Form PCT/ISA/210 (patent family annex) (July 2022)